# EUROPEAN PATENT APPLICATION

(11) **EP 4 807 872 A1**
(43) Date of publication of application: **16.09.2026**
(21) Application number: 26164514.7
(22) Date of filing: 13.03.2026
(51) Int. Cl.: H01M 50/24, H01M 50/271, H01M 50/287

(54) **UNDERWATER SEALED BATTERY AND UNDERWATER ROBOT**

(30) Priority: 14.03.2025 CN 202510300371
(71) Applicant: Sublue Underwater AI Co., Ltd., Tianjin 300457 (CN)
(72) Inventor: GUO, Yueshan, Tianjin 300457 (CN); LI, Licheng, Tianjin 300457 (CN); KANG, Chunsheng, Tianjin 300457 (CN); LI, Jian, Tianjin 300457 (CN); ZHAO, Jing, Tianjin 300457 (CN)
(74) Representative: Becker Kurig & Partner Patentanwälte mbB

(57) **Abstract**

the present disclosure provides an underwater sealed battery, including a battery cover and a battery body. The battery cover is detachably arranged at the top of the battery body to seal the battery body. The battery cover includes a sealing portion and a fixing part of the sealing portion. The sealing portion includes a base of the battery sealing cover, a detachable rim seal of the base of the battery sealing cover and a sealing ring. An upper surface of the detachable rim seal of the base of the battery sealing cover is fixedly connected to the bottom of the base of the battery sealing cover by ultrasonic welding, and a ring groove is formed between a periphery of the detachable rim seal of the base of the battery sealing cover and a periphery of the bottom of the base of the battery sealing cover. The sealing ring is disposed in the ring groove. The battery body includes a battery housing. A groove is formed in the top of the battery housing. The groove receives the bottom of the sealing portion and fits the sealing ring. The sealed battery provided by the present disclosure is easy to disassemble, and sealing parts are locked together, thereby being unlikely to be lost. The ring groove is formed by ultrasonic welding, such that an inner surface of the ring groove is free of a parting line, and the fit between the sealing ring and the ring groove is improved, thereby improving the sealing effect.

## Description

### Technical Field

The present disclosure relates to the technical field of battery application, in particular to, an underwater sealed battery and an underwater robot.

### Background

Devices for underwater operations, such as underwater robot cleaners and underwater thrusters, need to operate underwater for a long time. Power supply batteries of these devices are often rechargeable to be used repeatedly. To guarantee the safety and stability of underwater operations, the requirements for the sealing performance of the power supply batteries are high. Existing underwater sealed batteries are generally sealed by glue filling or sealed by a seal housing.

The inventors of the present disclosure found that if the housing of a sealed battery using glue filling is damaged, a sealing layer will be easily damaged, resulting in a seal failure. A power supply battery sealed with a seal housing is not hermetic itself, seal components may be lost when the internal battery is dissembled and replaced, and if the battery is accidentally exposed to water when replaced, the battery may be short-circuited and damaged.

The contents in the background are merely techniques known by inventors and do not certainly represent existing techniques in the art.

### Summary

The technical solution of the present disclosure aims to solve the aforementioned technical problems that sealed batteries using glue filling and power supply batteries sealed with a seal housing are poor in sealing effect and seal components are easily lost.

In a first aspect, the present disclosure provides an underwater sealed battery. The underwater sealed battery includes a battery cover and a battery body. The battery cover is detachably arranged at a top of the battery body to seal the battery body. The battery cover includes a sealing portion and a fixing part of the sealing portion.

The sealing portion includes a base of the battery sealing cover, a detachable rim seal of the base of the battery sealing cover and a sealing ring. An upper surface of the detachable rim seal of the base of the battery sealing cover is fixedly connected to a bottom of the base of the battery sealing cover by ultrasonic welding, and a ring groove is formed between a periphery of the detachable rim seal of the base of the battery sealing cover and a periphery of the bottom of the base of the battery sealing cover. The sealing ring is disposed in the ring groove. The fixing part of the sealing portion is detachably connected to the base of the battery sealing cover and detachably connected to the battery body, and the sealing portion is received between the fixing part of the sealing portion and the battery body in a case where the fixing part of the sealing portion is connected to the battery body. The battery body includes a battery housing, and a groove is formed in a top of the battery housing. The groove receives a bottom of the sealing portion and fits the sealing ring.

Optionally, the battery cover further includes a battery cover plate and a lubricating gasket. The battery cover plate is clamped above the fixing part of the sealing portion, and the lubricating gasket is disposed between the base of the battery sealing cover and the fixing part of the sealing portion.

Optionally, the fixing part of the sealing portion is provided with a first limiting part. The base of the battery sealing cover is provided with a second limiting part and a third limiting part. The first limiting part is in snap-fit with the second limiting part to lock the base of the battery sealing cover and the fixing part of the sealing portion in a Z-axis direction. The third limiting portion limits a horizontal rotation angle of the fixing part of the sealing portion with respect to the base of the battery sealing cover.

Optionally, the fixing part of the sealing portion is further provided with a fourth limiting part and a fifth limiting part. A sixth limiting part and a seventh limiting part are arranged at an end of the battery housing. The fourth limiting part is in snap-fit with the sixth limiting part to restrain the fixing part of the sealing portion and the battery housing from moving with respect to each other. In a case where the fifth limiting part is in snap-fit with the seventh limiting part, the fixing part of the sealing portion and the battery housing are restrained from moving with respect to each other in the Z-axis direction, and the fourth limiting part and the sixth limiting part are clamped together.

Optionally, an opening is formed at an end of the battery housing. The battery body further includes a battery circuit board. The battery circuit board is fixed to a top of an interior of the battery housing. A positive contact leaf spring and a negative contact leaf spring of the battery circuit board stretch out of the opening. The battery body further includes a sealing ring shaped like Chinese character " 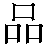 " arranged in the battery housing and tightly disposed below the battery circuit board to seal the battery circuit board.

Optionally, a first cavity is formed in an upper end of the base of the battery sealing cover. A battery cover circuit board is fixed in the first cavity. A first sealing layer is arranged above the battery cover circuit board in the first cavity to seal the battery cover circuit board. A second cavity is formed in the battery housing. A second sealing layer is arranged in the second cavity to seal an interior of the battery body.

Optionally, a Hall magnetic element is arranged at a bottom of the battery cover circuit board. A Hall element is arranged on the battery circuit board. In a case where the fixing part of the sealing portion and the battery body are screwed and fixed together, the Hall magnetic element and the Hall element are opposite to each other in position, and a relative distance between the Hall magnetic element and the Hall element is not greater than a Hall sensing trigger distance.

Optionally, the present disclosure further provides an underwater robot, including the sealed battery.

Optionally, the underwater robot is an underwater thruster.
the present disclosure has the following beneficial effects:

According to the underwater sealed battery provided by the present disclosure, the battery cover and the battery body are designed to be separable, such that the battery is easy to disassemble. Adjacent parts of the battery cover may be locked together, such that independent parts in the battery cover are unlikely to be lost. The ring groove is formed by ultrasonic welding, such that the surface of the ring groove is free of a parting line, and the fit between the sealing ring and the ring groove is improved, thereby improving the sealing effect.

### Brief Description of the Drawings

To more clearly describe the technical solutions in the embodiments of the present disclosure, drawings used in the description of the embodiments is briefly introduced below. Obviously, the drawings described below merely illustrate some embodiments of the present disclosure, and those ordinarily skilled in the art may obtain other drawings based on the following ones without creative labor.
Fig. 1 shows a schematic exploded structural diagram of a sealed battery according to an embodiment of the present disclosure.
Fig. 2 shows a schematic structural diagram of the sealed battery according to an embodiment of the present disclosure.
Fig. 3 shows a schematic structural diagram of a battery cover, from one perspective, according to an embodiment of the present disclosure.
Fig. 4 shows a schematic partial exploded diagram of a battery body, from one perspective, according to an embodiment of the present disclosure.
Fig. 5 shows a schematic sectional view of the battery body, from one perspective, according to an embodiment of the present disclosure.
   fixing part of the sealing portionbase of the battery sealing cover detachable rim seal of the base of the battery sealing cover

### Detailed Description of Embodiments

Hereinafter, illustrative embodiments are more comprehensively described with reference to the accompanying drawings. The illustrative embodiments may be implemented in various forms, and the present disclosure should not be construed as limiting to the embodiments expounded here. On the contrary, these embodiments are furnished to provide a more comprehensive and complete understanding of the present disclosure and comprehensively convey the conception of the illustrative embodiments to those skilled in the art. Identical reference signs in the drawings indicate identical or similar parts, which will not be described repeatedly.

Features, structures or characteristics described here may be integrated in one or more embodiments in any proper ways. In the following description, many specific details are furnished to provide a full understanding of the embodiments of the disclosure. Those skilled in the art will realize that the technical solution of the disclosure may be implemented without one or more of these specific details, or other methods, components, materials or devices may be adopted. In these cases, well-known structures, methods, devices, implementations, materials or operations will not be illustrated or described in detail.

In addition, terms "comprise", "comprising", "include", "including", "has", "having" and any variants thereof intend to indicate non-exclusive inclusion. For example, a process, method, system, product or device including a series of steps or units is not limited to the steps or units listed, and may optionally include steps or units that are not listed or may include other intrinsic steps or units of the process, method, product or device.

Terms such as "first" and "second" in the specification, claims and drawings of the present disclosure are used for distinguishing different objects rather than describing specific orders.

The technical solution of the present disclosure is clearly and completely described below in conjunction with drawings in the embodiments of the present disclosure. Obviously, the embodiments described below are merely illustrative ones rather than all possible ones of the present disclosure. All other embodiments obtained by those skilled in the art on the basis of the following ones without creative labor should also fall within the protection scope of the present disclosure.

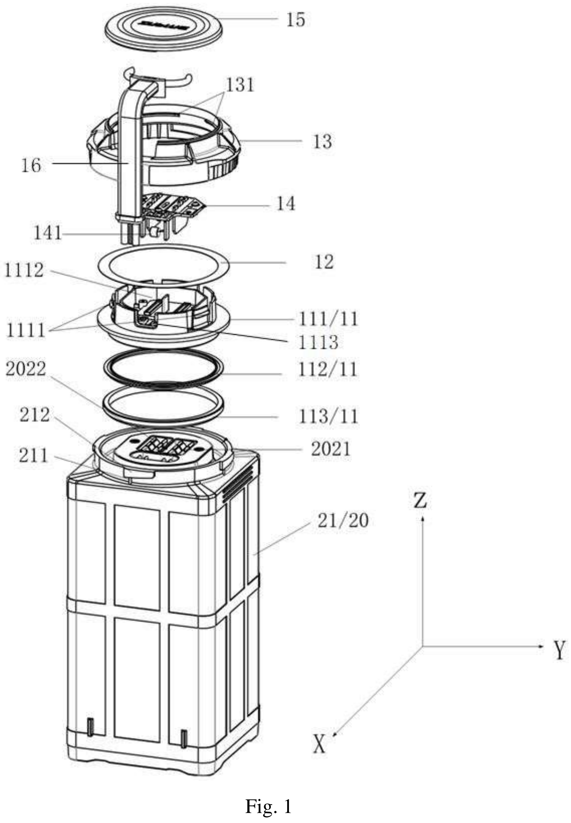

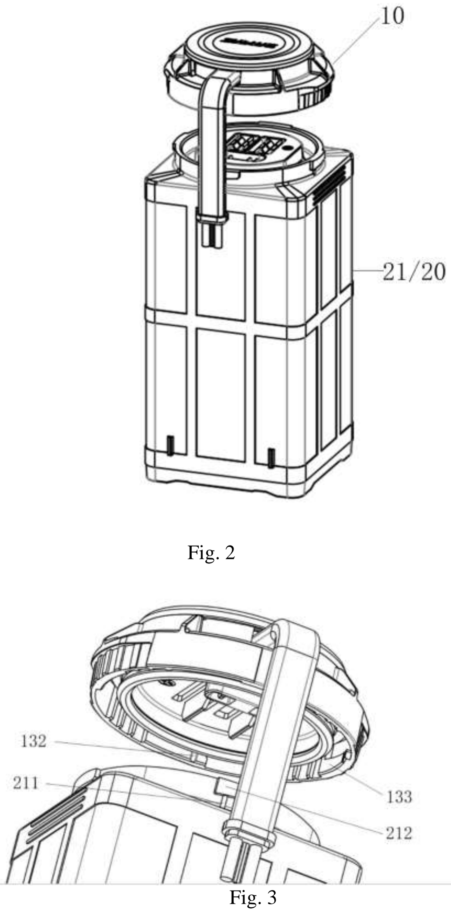

According to an illustrative embodiment, as shown in Figs. 1 and 2, the present disclosure provides an underwater sealed battery.

The sealed battery includes a battery cover 10 and a battery body 20. The battery cover 10 is detachably arranged at the top of the battery body 20 to seal the battery body 20. The battery cover 10 includes a sealing portion 11 and a fixing part of the sealing portion 13.

The sealing portion 11 includes a base of the battery sealing cover 111, a detachable rim seal of the base of the battery sealing cover 112 and a sealing ring 113. An upper surface of the detachable rim seal of the base of the battery sealing cover 112 is fixedly connected to the bottom of the base of the battery sealing cover 111 by ultrasonic welding, and a ring groove is formed between a periphery of the detachable rim seal of the base of the battery sealing cover 112 and a periphery of the bottom of the base of the battery sealing cover 111.

The sealing ring 113 is disposed in the ring groove. The fixing part of the sealing portion 13 is disposed around the top of the base of the battery sealing cover 111 and detachably connected to the battery body 20. The battery body 20 includes a battery housing 21. A groove is formed in the top of the battery housing 21. The groove receives the bottom of the sealing portion 11 and fits the sealing ring 113.

For example, the battery cover 10 and the battery housing 21 may be made of Acrylonitrile-Butadiene-Styrene (ABS). The battery cover 10 and the battery body 20 may be detachably connected by threaded connection. For example, matched fastening threads are arranged on the battery cover 10 and the battery body 20, and the battery cover 10 and the battery body 20 are detachably connected under the clamping effect of the threads.

For example, the battery cover 10 and the battery body 20 may be detachably connected by riveting. For example, a tenon and a rabbet allowing the tenon to be inlaid therein may be arranged on the battery cover 10 and the battery body 20 to detachably connect the battery cover 10 and the battery body 20.

For example, the battery cover 10 and the battery body 20 may be detachably connected by snap-fit. For example, snap-fit structures, that may come into snap-fit with each other, may be arranged on the battery cover 10 and the battery body 20 to detachably connect the battery cover 10 and the battery body 20. In a case where the battery cover 10 and the battery body 20 are screwed and fixed together, the battery cover 10 covers and seals a battery end, where electrodes are exposed, of the battery body 20.

For example, the sealing ring 113 may be a rubber ring, and a specific angle may be formed between a contact surface between the sealing ring 113 and the groove in the top of the battery housing 21 and the groove. When the base of the battery sealing cover 111 moves downwards, the amount of compression of the sealing ring 113 will be increased under the action of the groove in the top of the battery housing 21, such that the fit between the sealing ring 113 and the groove is improved, thereby improving the sealing performance.

In the above embodiment, the sealing ring 113 and the groove are combined to realize radial sealing. The upper surface of the detachable rim seal of the base of the battery sealing cover 112 and the bottom of the base of the battery sealing cover 111 may be fixedly connected by ultrasonic welding to form a complete part. By ultrasonic welding, a parting line of the base of the battery sealing cover 111 is located at the root of the base of the battery sealing cover 111 or at a pointed end of draft, such that the ring groove is free of the parting line and is more complete and smoother. The technical solution in this embodiment improves the fit between the sealing ring 113 and the ring groove, thereby improving the sealing effect.

According to an illustrative embodiment, as shown in Fig. 1, the battery cover 10 further includes a battery cover plate 15 and a lubricating gasket 12. The battery cover plate 15 is clamped above the fixing part of the sealing portion 13. The lubricating gasket 12 is disposed between the base of the battery sealing cover 111 and the fixing part of the sealing portion 13.

For example, the battery cover plate 15 may be made from ABS engineering plastic. The battery cover plate 15 may cover and protect a battery cover circuit board 14 in the base of the battery sealing cover 111. The lubricating gasket 12 may be a metal ring gasket.

In the above embodiment, the lubricating gasket 12 is arranged between the fixing part of the sealing portion 13 and the base of the battery sealing cover 111. The technical solution in this embodiment may reduce the friction force between the fixing part of the sealing portion 13 and the base of the battery sealing cover 111 and reduce the resistance applied to the fixing part of the sealing portion 13 during rotation, thus facilitating screwing operations of the fixing part of the sealing portion 13.

According to an illustrative embodiment, as shown in Fig. 1, the fixing part of the sealing portion 13 is provided with a first limiting part 131. The base of the battery sealing cover 111 is provided with a second limiting part 1111 and a third limiting part 1113. The first limiting part 131 and the second limiting part 1111 are in snap-fit to lock the base of the battery sealing cover 111 and the fixing part of the sealing portion 13 in a Z-axis direction. The third limiting part 1113 is used for limiting a horizontal rotation angle of the fixing part of the sealing portion 13 with respect to the base of the battery sealing cover 111 by being assembled to a battery cover cable 16, thus allowing for quick identification of the initial assembly position of the sealing portion 13 and ensuring that when the first limiting part 131 and the second limiting part 1111 rotate, sufficient contact area is maintained and they would not disengage.

For example, the first limiting part 131 may be a first group of bumps which are arranged at intervals. The second limiting part 1111 may be a second group of bumps which are arranged at intervals. The first group of bumps are in snap-fit with the second group of bumps one-by-one. After the first group of bumps come into snap-fit with the second group of bumps, the base of the battery sealing cover 111 and the fixing part of the sealing portion 13 will not be separated from each other in the Z-axis direction and may rotate relatively in a horizontal direction.

The third limiting part 1113 may form a bump arranged on the base of the battery sealing cover 111 by being assembled to the battery cover cable 16. When the fixing part of the sealing portion 13 rotates horizontally, the first limiting part 131 and the second limiting part 1111 move relatively in the horizontal direction. In a case where the fixing part of the sealing portion 13 rotates to a maximum horizontal rotation angle, the sealing portion 13 comes into contact with the battery cover cable 16, the battery cover cable 16 prevents the first limiting part 131 from further moving, such that the first limiting part 131 and the second limiting part 1111 are prevented from being separated from each other.

In the above embodiment, the limiting parts are arranged on the fixing part of the sealing portion 13 and the base of the battery sealing cover 111. By adopting the technical solution in this embodiment, the base of the battery sealing cover 111 and the fixing part of the sealing portion 13 are prevented from being separated from each other in the Z-axis direction, and the fixing part of the sealing portion 13 and the base of the battery sealing cover 111 may rotate freely within a fixed angle in the horizontal direction.

According to an illustrative embodiment, as shown in Figs. 1 and 3, the fixing part of the sealing portion 13 is further provided with a fourth limiting part 132 and a fifth limiting part 133. A sixth limiting part 211 and a seventh limiting part 212 are arranged at an end of the battery housing 21. The fourth limiting part 132 may be in snap-fit with the sixth limiting part 211 to restrain the fixing part of the sealing portion 13 and the battery housing 21 from moving with respect to each other. The fifth limiting part 133 may be in snap-fit with the seventh limiting part 212 to restrain the fixing part of the sealing portion 13 and the battery housing 21 from moving with respect to each other in the Z-axis direction. After the fourth limiting part 132 and the sixth limiting part 211 are clamped together, the fifth limiting part 133 and the seventh limiting part 212 are clamped together, correspondingly.

For example, the fourth limiting part 132 may be a group of grooves which are arranged at intervals. The sixth limiting part 211 may be a third group of bumps which are arranged at intervals. The group of grooves are in snap-fit with the third group of bumps one-by-one. The fifth limiting part 133 may be a fourth group of bumps. The seventh limiting part 212 may be a fifth group of bumps. After the group of grooves come into snap-fit with the third group of bumps one-by-one, the fourth group of bumps and the fifth group of bumps are clamped together.

By arranging the limiting parts on the fixing part of the sealing portion 13 and at the end of the battery housing 21, the battery cover 10 and the battery body 20 are locked and fixed together.

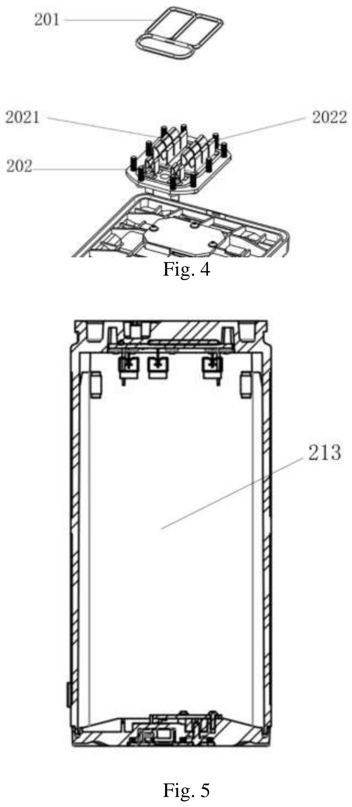

According to an illustrative embodiment, as shown in Figs. 1 and 4, an opening is formed in an end of the battery housing 21. The battery body 20 further includes a battery circuit board 202 and a sealing ring 201 shaped like a Chinese character " 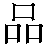 ". The battery circuit board 202 is fixed to a top end of the interior of the battery housing 21. A positive contact leaf spring 2022 and a negative contact leaf spring 2021 of the battery circuit board 202 stretch out from the opening. The sealing ring 201 is arranged in the battery housing 21 and tightly disposed below the battery circuit board 202 to seal the battery circuit board 202.

For example, the shape of the sealing ring 20matches the distribution shape of electrodes of the battery circuit board 202. The sealing ring 201 may be a rubber ring and may seal the bottom end surface of the battery circuit board 202.

According to an illustrative embodiment, as shown in Fig. 1, a first cavity 1112 is formed in an upper end of the base of the battery sealing cover 111. The battery cover circuit board 14 and a first sealing layer are fixed in the first cavity 1112. The first sealing layer is arranged above the battery cover circuit board 14 to seal the battery cover circuit board 14.

For example, the first sealing layer may be prepared by resin glue filling. The battery cover circuit board 14 is encapsulated in the first cavity 1112, such that the battery cover circuit board 14 may be sealed and protected.

According to an illustrative embodiment, as shown in Fig. 5, a second cavity 213 is formed in the battery housing 21. A second sealing layer is arranged in the second cavity 213, and the second sealing layer seals the interior of the battery body 20.

For example, the second sealing layer may be prepared by resin glue filling. The second sealing layer may seal and protect the battery body 20.

According to an illustrative embodiment, as shown in Figs. 1 and 4, a Hall magnetic element 141 is arranged at the bottom of the battery cover circuit board 14 of the battery, and a Hall element is arranged on the battery circuit board 202. After the fixing part of the sealing portion 13 and the base of the battery sealing cover 111 are screwed and fastened together, the Hall magnetic element 141 is opposite to the Hall element in position, and a relative distance between the Hall magnetic element 141 and the Hall element is not greater than a Hall sensing trigger distance. After the battery cover 10 and the battery body 20 are fixed and screwed together, Hall sensing is triggered, and the battery discharges. After the battery cover 10 and the battery body 20 are separated, Hall sensing will not be triggered, and the battery does not discharge.

For example, a transmission part may be arranged on the battery circuit board 202, and the Hall magnetic element 141 is fixed to the transmission part. The distance between the Hall magnetic element 141 and the Hall element is adjusted by adjusting the movement of the transmission part in the Z-axis direction, so as to control Hall sensing to be triggered to control discharging of the battery. In a case where the battery body 20 falls off, the relative distance between the Hall magnetic element 141 and the Hall element is greater than the Hall sensing trigger distance, and the battery body 20 does not discharge, thus reducing the risk of electrode short-circuits and electrochemical corrosion of the battery.
the present disclosure further relates to an underwater robot, including the sealed battery described above. For example, the underwater robot may be an underwater thruster.

Illustratively, the sealed battery in the embodiments of the present disclosure may be mounted on a swimming pool robot, an electric outboard motor or other products. the present disclosure has no limitation in this aspect.

Finally, it should be noted that the above embodiments are merely preferred ones of the present disclosure and are not used to limit the present disclosure. Although the present disclosure is described in detail with reference to the above embodiments, those skilled in the art may still make modifications to the technical solutions in the embodiments described above or make equivalent substitutions to part of the technical features in the embodiments. Any modifications, equivalent substitutions and improvements made on the basis of the spirit and principle of the present disclosure should fall within protection scope of the present disclosure.

### Reference Signs:

10, battery cover;
11, sealing portion;
12, lubricating gasket;
13, fixing part of the sealing portion;
14, battery cover circuit board;
15, battery cover plate;
16, battery cover cable;
20, battery body;
21, battery housing;
111, base of the battery sealing cover ;
112, detachable base of the battery sealing cover rim seal;
113, sealing ring;
141, Hall magnetic element;
131, first limiting part;
1111, second limiting part;
1113, third limiting part;
132, fourth limiting part;
133, fifth limiting part;
1112, first cavity;
211, sixth limiting part;
212, seventh limiting part;
2021, negative contact leaf spring;
2022, positive contact leaf spring;
201, sealing ring shaped like Chinese character " 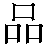 ";
202, battery circuit board; and
213, second cavity.

## Claims

1. An underwater sealed battery, comprising a battery cover and a battery body,
wherein the battery cover is detachably arranged at a top of the battery body to seal the battery body, and comprises:
a sealing portion comprising:
a base of the battery sealing cover;
a detachable rim seal of the base of the battery sealing cover, an upper surface of the detachable rim seal of the base of the battery sealing cover being fixedly connected to a bottom of the base of the battery sealing cover by ultrasonic welding, and a ring groove being formed between a periphery of the detachable rim seal of the base of the battery sealing cover and a periphery of the bottom of the base of the battery sealing cover; and
a sealing ring, disposed in the ring groove; and
a fixing part of the sealing portion, being detachably connected to the base of the battery sealing cover and detachably connected to the battery body, and the sealing portion being received between the fixing part of the sealing portion and the battery body in a case where the fixing part of the sealing portion is connected to the battery body;
the battery body comprises:
a battery housing, a groove being formed in a top of the battery housing, and the groove receiving a bottom of the sealing portion and fitting the sealing ring.

2. The underwater sealed battery according to claim 1, wherein the battery cover further comprises:
a battery cover plate, clamped above the fixing part of the sealing portion; and
a lubricating gasket, disposed between the base of the battery sealing cover and the fixing part of the sealing portion.

3. The underwater sealed battery according to claim 1, wherein
the fixing part of the sealing portion is provided with a first limiting part;
the base of the battery sealing cover is provided with a second limiting part and a third limiting part;
the first limiting part is in snap-fit with the second limiting part to lock the base of the battery sealing cover and the fixing part of the sealing portion in a Z-axis direction; and
the third limiting portion limits a horizontal rotation angle of the fixing part of the sealing portion with respect to the base of the battery sealing cover.

4. The underwater sealed battery according to claim 3, wherein
the fixing part of the sealing portion is further provided with a fourth limiting part and a fifth limiting part;
a sixth limiting part and a seventh limiting part are arranged at an end of the battery housing;
the fourth limiting part is in snap-fit with the sixth limiting part to restrain the fixing part of the sealing portion and the battery housing from moving with respect to each other; and
in a case where the fifth limiting part is in snap-fit with the seventh limiting part, the fixing part of the sealing portion and the battery housing are restrained from moving with respect to each other in the Z-axis direction, and the fourth limiting part and the sixth limiting part are clamped together.

5. The underwater sealed battery according to claim 1, wherein an opening is formed at an end of the battery housing, and the battery body further comprises:
a battery circuit board, being fixed to a top of an interior of the battery housing, and a positive contact leaf spring and a negative contact leaf spring of the battery circuit board stretching out of the opening; and
a sealing ring shaped like a Chinese character " 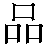 ", being arranged in the battery housing and tightly disposed below the battery circuit board to seal the battery circuit board.

6. The underwater sealed battery according to claim 5, wherein
a first cavity is formed in an upper end of the base of the battery sealing cover, and a battery cover circuit board is fixed in the first cavity;
a first sealing layer is arranged in the first cavity, and the first sealing layer is located above the battery cover circuit board to seal the battery cover circuit board;
a second cavity is formed in the battery housing; and
a second sealing layer is arranged in the second cavity to seal an interior of the battery body.

7. The underwater sealed battery according to claim 6, wherein
a Hall magnetic element is arranged at a bottom of the battery cover circuit board, and a Hall element is arranged on the battery circuit board; and
in a case where the fixing part of the sealing portion and the battery body are screwed and fixed together, the Hall magnetic element and the Hall element are opposite to each other in position and located within a Hall sensing trigger distance.

8. An underwater robot, comprising the sealed battery according to any one of claims 1-7.

9. The underwater robot according to claim 8, wherein the underwater robot is an underwater thruster.
